# EUROPEAN PATENT APPLICATION

(11) **EP 1 491 300 A1**
(43) Date of publication of application: **29.12.2004**
(21) Application number: 04253748.0
(22) Date of filing: 23.06.2004
(51) Int. Cl.: B25J 19/00

(54) **Connection of a robot mechanical unit and a control unit**

(30) Priority: 26.06.2003 JP 2003183208
(71) Applicant: FANUC LTD, Minamitsuru-gun, Yamanashi 401-0597 (JP)
(72) Inventor: Inoue, Toshihiko, Fujiyoshida-shi Yamanashi, 403-0017 (JP); Nakayama, Kazutaka, Minamitsuru-gun Yamanashi, 403-0023 (JP)
(74) Representative: Billington, Lawrence Emlyn

(57) **Abstract**

The present invention provides a robot that can use an inexpensive connector and keep the connector assembly dust-free and safe. A base (4) of a robot mechanical unit (2) has a hollow structure. An opening (4a) is provided on a lateral surface of the base (4), a through-hole (11a) is provided on a closing member (11) that covers the opening (4a), and a cable mounting member (12) provided with a through-hole is fixed on the closing member (11). A connecting cable (3) from a control unit (1) passes through the through-holes and is connected to robot mechanical unit-internal cables (5) by a cable connector (15) inside the base (4). The robot mechanical unit-internal cables (5) are fixed by a cable clamp (8) inside the base and a swivel body (7). The connection (15) is installed inside the base (4) and suspended in space, providing superior dust-proofing. No external force is applied, and so an inexpensive configuration can be achieved that does not require an especially strong connector (15). Moreover, the connector (15) can be connected and disconnected easily.

## Description

### BACKGROUND OF THE INVENTION

### 1. Field of the Invention

The present invention relates to a robot, and more particularly to an industrial robot having features in cable connection.

### 2. Description of Related Art

In industrial and other robots, typically, a robot mechanical unit and a control unit that controls the robot mechanical unit are arranged separately, with the robot mechanical unit-internal cables and the control unit electrically connected to each other by a connecting cable. The robot mechanical unit-internal cables electrically connect the connecting cable to the individual servomotors that drive the joints of the robot mechanical unit. By transmitting operating commands from the control unit through the connecting cable to the individual servomotors, the robot mechanical unit can be made to perform a desired operation.

For example, JP 8-1574A describes a robot in which a connecting cable extending from an interior of the control unit is connected to an internal cable of the robot mechanical unit by a connector at a lateral surface of a base of the robot mechanical unit. Further, JP 8-1574A also discloses, with respect to the installation and connection of the robot mechanical unit and the control unit, for the purpose of reducing an installation space required for the robot, that the control unit is contained in a support frame on which the robot mechanical unit is placed, a hole for inserting the connecting cable is provided in a bottom surface of the base of the robot mechanical unit, and the connecting cable is passed through the hole so as to electrically connect the internal cables of the mechanical unit with the control unit via a connector arranged inside the base.

Coupling using a connector on the side of the base arose out of transportation and maintenance considerations. During transportation, the connector at the side of the base is disconnected and the connecting cable is coiled with the control unit so that the robot mechanical unit and the control unit can be transported separately, thus providing ease of transportation. During maintenance as well, by performing the same operation, the control unit can be easily replaced if some malfunction occurs therewith, thus providing ease of maintenance.

Since robots are usually installed in harsh operating conditions such as factories, the above-described connector for electrically connecting the robot mechanical unit and the control unit must also be highly waterproof so as to be able to withstand such difficult operating environments. In addition, because the connector is exposed, it must be strong enough to not break easily when subjected to external force. Further, it is preferable that the connecting construction of the connecting cable allow easy connection and disconnection. As a result, the connector has become costly and its assembly has come to involve a great number of steps, such as mounting a seal member. Moreover, in order to use the robot installation space efficiently, it is preferable that the connector not take up space unnecessarily by being extended from a rear of the robot base.

In addition, although installing the control unit inside the support frame of the robot mechanical unit and providing the connector that connects the control unit connecting cable to the internal cables as described in the aforementioned JP 8-1574A eliminates the problem of the connector protruding from the base, the connector still remains as costly as before, and moreover, it is not easy to disconnect the connecting cable from the base of the robot mechanical unit.

### SUMMARY OF THE INVENTION

The present invention provides a robot capable of easily connecting and disconnecting a robot mechanical unit and a control unit using an inexpensive connector without being exposed to exterior of the robot mechanical unit.

A robot of the present invention comprises: a hollow base provided in the robot mechanical unit and having an opening on a lateral surface thereof; a closing member attached to the base so as to cover the opening and having a through-hole or a cutout through which a connecting cable passes; and a connector arranged inside the base for connecting the connecting cable passed through the through-hole or the cutout of the closing member with an internal cable of the robot mechanical unit.

The connecting cable and the internal cable at opposite sides of the connector may be fixed inside the base.

Further, the robot may comprise sealing means for sealing a portion of the connecting cable passing through the through-hole or the cutout of the closing member, and may comprise a protective cover for covering the connecter.

### BRIEF DESCRIPTION OF the DRAWINGS

FIG. 1 is a diagram showing an overall view of a robot according to one embodiment of the present invention;
FIGS. 2a and 2b are diagrams showing a connecting portion between connecting cables and robot mechanical unit-internal cables of one embodiment;
FIGS. 3a and 3b are diagrams illustrating mountings and seals, respectively, for the connecting cables of one embodiment;
FIGS. 4a and FIG. 4b are diagrams illustrating mountings and seals for the connecting cables according to another embodiment; and
FIG. 5 is a diagram showing the structure of a connector assembly that connects the robot mechanical unit-internal cables and the connecting cables in the embodiment shown in FIGS. 2a and 2b.

### DETAILED DESCRIPTION

Preferred embodiments of the present invention are now described in detail referring to the accompanying drawings.

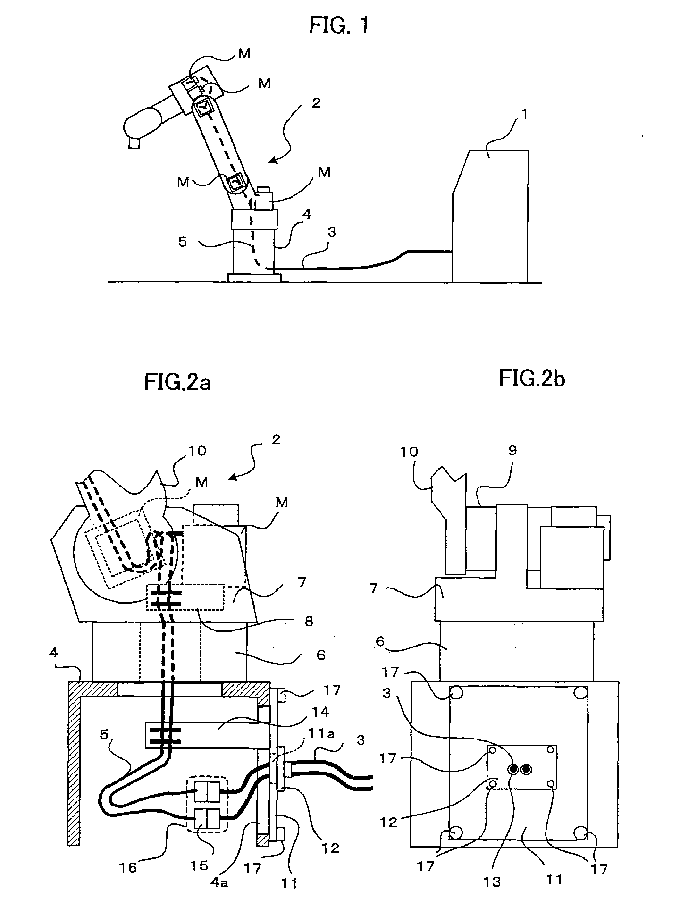

FIG. 1 is a diagram showing an overall structure of a robot system according to one embodiment of the present invention. A connecting cable 3 extending from inside a control unit 1 is connected through a connector to an internal cable 5 of a robot mechanical unit 2 inside a hollow base 4 of the robot mechanical unit 2. The internal cable 5 of the robot mechanical unit 2 electrically connects the connecting cable 3 with the individual servomotors for driving joints of the robot mechanical unit 2, to allow the robot mechanical unit to perform a desired operation by providing operation commands from the control unit 1 to the individual servomotors.

FIGS. 2a and 2b are diagrams showing the structure of the connection between connecting cables 3 and the internal cables 5 of the robot mechanical unit. FIG. 2a shows a partially sectioned front view of the base 4 and FIG. 2b is a side view. A swivel body 7 is mounted in the hollow base 4 of the robot mechanical unit 2 via a speed reducer 6 for revolution. The speed reducer 6 is of hollow construction, and contains the internal cables 5 that electrically connect servomotors M that drive the joints of the robot mechanical unit 2 with the connecting cables 3, and which are connected to the connecting cables 3 through cable connectors 15 inside the base 4.

The internal cables 5 pass through the interior of the robot mechanical unit 2, that is, the interior of the base 4, and the interior of the speed reducer 6, an interior of the swivel body 7 and an interior of a swing arm 10, and are connected to the servomotors. In addition, the internal cables 5 are fixed in place by a cable clamp 8 inside the base 4 and by a cable clamp 14 inside the swivel body 7 so as to be able to smoothly absorb twisting of the cables as the swivel body 7 revolves, with the inner cable absorbing the twist. An aperture 4a is provided in one lateral surface (hereinafter "side") of the base 4, with a closing member 11 fixed in place by a bolt or the like so as to cover the aperture 4a. Of course, the aperture 4a is not a round a hole but rather a staple-shaped opening, one part of which may be an open portion. Further, a cable through-hole 11a is also provide on the closing member 11 as well, with a cable mounting member 12 fixedly mounted by stop screws 17 or the like so as to cover the cable through-hole 11a. It should be noted that, in FIGS. 2a and 2b, reference numeral 9 designates a speed reducer for the swing arm and reference numeral 16 designates a protective cover that protects the connector 15.

The connecting cables 3 connected with the control unit 1 are fed to the base of the robot mechanical unit 2 and through the cable mounting member 12 and the closing member 11 provided with the mounted cable through-hole 11 a so as to fill the aperture 4a in the side of the hollow base 4 from outside the base 4 via the cable through-hole 11a, led into the interior of the base 4 and connected to the internal cables 5 by the cable connector.

The internal cables 5 and the connecting cables 3 that are connected together by the cable connectors 15 are disposed so that the connecting cables 3 are fixed in place by the mounting member 12 fixedly mounted on the closing member 11 via a seal member 13 and the internal cables 5 are fixed in place by the cable clamp 14 inside the base 4, so that external forces such as a pulling force do not act on the contact of the cable connector 15. In addition, the cable connector 15, because it is disposed within the base 4, is not subjected to unnecessary force from objects other than the robot.

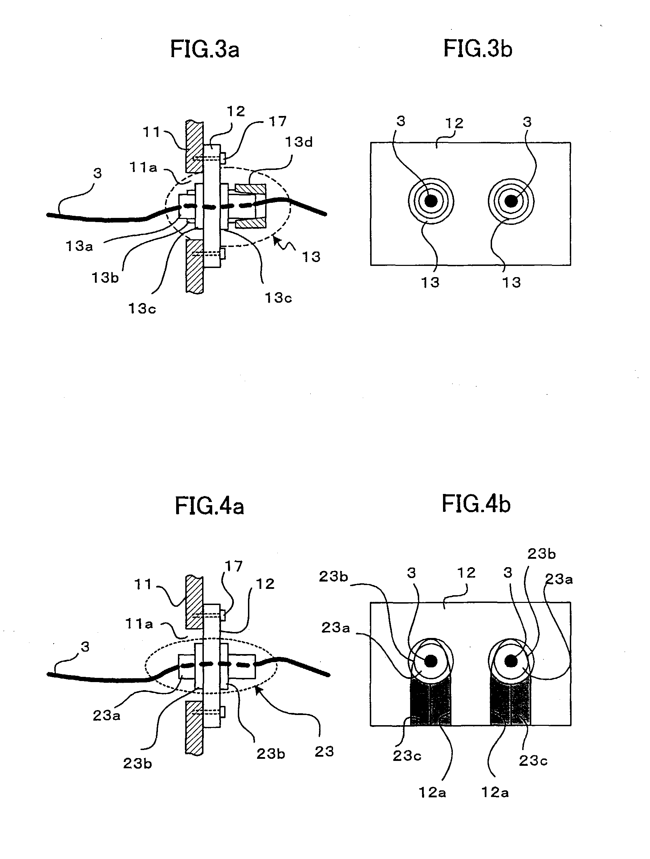

FIGS. 3a and 3b are diagrams illustrating the seal member 13 that fixes the connecting cables 3 in place on the mounting member 12 and seals the mounting. FIG. 3 a is a side view and FIG. 3b shows a front view of the mounting member 12. The connecting cable 3 may be mounted via the seal member 13 on the closing member 11 that is mounted so as to cover the through-hole aperture 4a on the side of the base 4. In the present embodiment, however, the through-hole aperture 4a in the side of the base 4 is made large enough to accommodate hands and enable a person to work easily inside the base 4, and therefore the closing member 11 is also large, and further, the mounting member 12 is provided so that the mounting member 12 can be fixedly mounted on the closing member 11. The seal member 13 used in the present embodiment is comprised of a rubber mounting 13a as an elastic member that clamps the connecting cable 3, a tube 13b that tightens the rubber mounting 13a, a nut 13c that fixes the tube 13b in place on the mounting member 12, and a tightening member 13d that tightens the tube 13b. The rubber mounting 13a is disposed on the inside of the tube 13b, and a screw (not shown) that engages the nut 13c and the tightening member 13d is disposed on the outside of the tube 13b.

The connecting cable 3 is passed through the tube 13b with the rubber mounting 13a disposed inside, the nut 13c and the tightening member 13d, and further passed through the through-hole of the mounting member 12. The tube 13b, inside of which is disposed the rubber mounting 13a, is then passed through the through-hole of the mounting member 12, and tightened and fixed in place on the mounting member 12 by the tube 13b nut 13c from both sides of the mounting member 12. Further, the tightening member 13 d is made to engage and compress the tube 13b so as to fix the connecting cable 3 in place via the rubber mounting 13a. The rubber mounting 13a acts as packing between the rubber mounting 13a and the connecting cable 3 as well as between the rubber mounting 13 a and the tube 13b, and thus a seal is obtained. In addition, by inserting a gasket at an end face of the nut 13c, a seal is obtained between the tube 13b and the mounting member 12 as well.

It should be noted that the above-described seal member is an ordinary one. Provided that the connecting cable 3 can be fixed in place on the mounting member 12 in a sealed state, any commercially available and inexpensive seal material may be used. The foregoing construction enables the operation of connecting the cable connector during installation of the robot to be completed simply by installing the connecting cable mounting as is, thus easing the task of coupling as well as similarly simplifying the task of decoupling.

FIGS. 4a and 4b are diagrams showing another embodiment of the mounting of the connecting cables 3 on the mounting member 12, and of the sealing of the connecting cable mounting. FIG. 4a shows a side elevation and FIG. 4b shows a front view of the mounting member 12. Cutouts 12a are provided in the mounting member 12 and rubber mountings (elastic bodies) 23a, through which the connecting cables 3 have been passed, are inserted into the cutouts 12a and fixed in place by wrapping nylon bands 23b around the periphery of the rubber mountings 23a on both sides of the mounting member 12, thus fixing the connecting cables 3 and the rubber mountings 23a in place on the mounting member 12. In this case, as the seal member, sponge rubber mountings 23c are provided in the cutouts 12a in the mounting member 12 to seal the connecting cables 3 and the cutouts 12a.

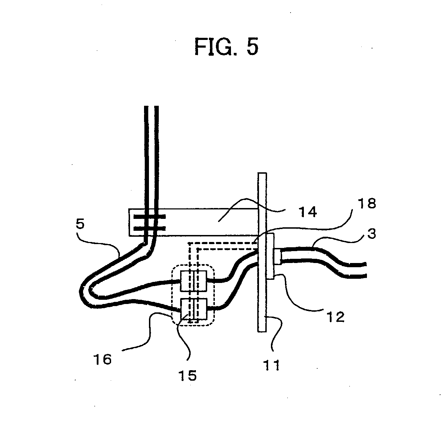

FIG. 5 is a diagram showing the structure of a connector assembly that connects the connecting cables 3 shown in FIGS. 2a and 2b and the internal cables 5 of the robot mechanical unit 2. The connector assembly in the present embodiment is comprised of a cable connector 15. The connecting cables 3 and the internal cables 5 on both ends of the cable connector 15 are fixed in place by the closing member 11 and the cable clamp 14, respectively, so as to be disposed within the base 4. The cable connector 15 is enclosed by the base 4, so external forces do not act directly on the cable connector 15 and thus the arrangement presents no problems in terms of strength, and moreover is safe. As a result, it is not necessary for the connector 15 to be constructed particularly strongly. Moreover, the base 4, depending on the circumstances of its manufacture, in some cases also has casting holes. Even in these cases, however, because the cable connector 15 is suspended in mid air the cable connector 15 is not directly exposed to dust and water from external sources. Further, when contemplating usage in harsh operating conditions, the protective cover 16 may cover the cable connector 15. In addition, as another method, a panel mount may be used as the cable connector 15 and the cable connector 15 fixed to a connector mount member 18 fixedly mounted on the base 4, so as to be able to suspend the cable connector 15 safely in mid air.

The above-described construction makes it possible to provide high dust resistance without the need for special reinforcement and without the use of an expensive connector. In addition, if the closing member 11 is removed from the base 4, the connector can be connected and disconnected with ease, providing ease of maintenance of the robot and ease of replacement of the control unit. Moreover, the cable connector 15 is disposed within the base 4, and thus the connector does not protrude from the rear of the base during connector coupling as in the conventional arrangement, and the amount of space required for installation of the robot can be held to a minimum.

The present invention enables the coupling of the connecting cables from the control unit and the robot mechanical unit-internal cables to be carried out using an inexpensive construction. Further, the connector assembly is highly dust-proof and coupling and decoupling at the connector assembly is easy, and thus coupling and decoupling of the robot mechanical unit 2 and the control unit can be carried out with ease.

## Claims

1. A robot having a robot mechanical unit and a control unit connected with each other by a connecting cable, said robot comprising:
a hollow base provided in the robot mechanical unit and having an opening on a lateral surface thereof;
a closing member attached to said base so as to cover said opening and having a through-hole or a cutout through which the connecting cable passes; and
a connector arranged inside said base for connecting the connecting cable passed through the through-hole or the cutout of said closing member with an internal cable of said robot mechanical unit.

2. A robot according to claim 1, wherein the connecting cable and the internal cable at opposite sides of said connector are fixed inside said base.

3. A robot according to claim 1, further comprising sealing means for sealing a portion of the connecting cable passing through the through-hole or the cutout.

4. A robot according to claim 1, further comprising a protective cover for covering said connecter.
